# EUROPÄISCHE PATENTSCHRIFT

(11) **EP 2 606 213 B1**
(45) Veröffentlichungstag und Bekanntmachung des Hinweises auf die Patenterteilung: **21.06.2017**
(21) Anmeldenummer: 11744013.1
(22) Anmeldetag: 12.08.2011
(51) Int. Cl.: F02B 37/16

(54) **VERFAHREN ZUM REGELN EINES STABILEN BETRIEBS EINES ABGASTURBOLADERS EINER VEBRENNUNGSKRAFTMASCHINE UND EINE ENTSPRECHENDE VORRICHTUNG**
METHOD FOR REGULATING STABLE OPERATION OF AN EXHAUST-GAS TURBOCHARGER OF AN INTERNAL COMBUSTION ENGINE, AND A CORRESPONDING APPARATUS
PROCÉDÉ DE RÉGLAGE DU FONCTIONNEMENT STABLE D'UN TURBOCOMPRESSEUR À GAZ D'ÉCHAPPEMENT D'UN MOTEUR À COMBUSTION INTERNE ET DISPOSITIF CORRESPONDANT

(30) Priorität: 18.08.2010 DE 102010034727
(43) Veröffentlichungstag der Anmeldung: 26.06.2013
(73) Patentinhaber: KNORR-BREMSE Systeme für Nutzfahrzeuge GmbH, 80809 München (DE)
(72) Erfinder: MARX, Manuel, 85258 Weichs (DE); RAO, Guang, 81375 München (DE)
(74) Vertreter: Schönmann, Kurt
(86) Internationale Anmeldenummer: PCT/EP2011/063972
(87) Internationale Veröffentlichungsnummer: WO 2012/022694

(56) Entgegenhaltungen:
- WO-A1-2007/058524
- WO-A1-2010/089087
- DE-A1- 19 637 571
- DE-A1-102004 047 975
- DE-A1-102007 027 968
- DE-A1-102007 033 693
- US-A1- 2009 217 898

## Beschreibung

Die Erfindung betrifft ein Verfahren zum Regeln eines stabilen Betriebs eines Abgasturboladers einer Verbrennungskraftmaschine nach dem Oberbegriff des Anspruchs 1. Die Erfindung bezieht sich auch auf eine Vorrichtung zur Durchführung eines solchen Verfahrens.

Eine derartige Verbrennungskraftmaschine mit Abgasturbolader weist in bestimmten Betriebszuständen, insbesondere bei einer Drehmomentanforderung, Phasen unzureichender Luftzufuhr durch den Abgasturbolader mit verdichteter Frischluft auf, wodurch ein so genanntes Turboloch entsteht. Zur Eliminierung dieses Turbolochs wird der erhöhte Luftbedarf durch eine Frischgasversorgungseinrichtung mittels zusätzlicher Frischluftzufuhr gedeckt und die so genannte transiente Performance der Verbrennungskraftmaschine gesteigert.

Diese zusätzliche Frischluft kann zum Beispiel einem Druckluftspeicher eines Fahrzeugluftsystems entnommen werden. Ein erhöhter Luftbedarf kann zu Anpassungen an einem Kompressor bzw. Luftpresser führen, der den Druckluftspeicher versorgt. Dabei kann eine Aufladung des Kompressors erfolgen, d.h. das er Ladeluft in Strömungsrichtung hinter einem Verdichter des Abgasturboladers als Eingangsluft abhängig von bestimmten Betriebsparametern der Verbrennungskraftmaschine erhält. Damit kann der erhöhte Luftbedarf vollständig gedeckt werden.

Kompressoren sind vorwiegend mechanisch, z.B. von der Kurbelwelle der Verbrennungskraftmaschine, angetrieben. Auch kontinuierlich aufgeladene Kompressoren sind insbesondere in den USA Stand der Technik.

Elektronisch geregelte Luftaufbereitungssysteme sind ebenfalls Stand der Technik und werden serienmäßig in mit Druckluft gebremsten Nutzfahrzeugen verbaut. Ein magnetisches Abschaltventil ist in dem elektronischen Luftaufbereitungssystem enthalten.

Eine Frischgasversorgungseinrichtung ist zum Beispiel aus der WO2006/089779A1 bekannt.

Alle Systeme für sich bringen Vorteile in Bezug auf Kraftstoffeinsparung, Emissionen und/oder transientem Leistungsvermögen eines Fahrzeugs.

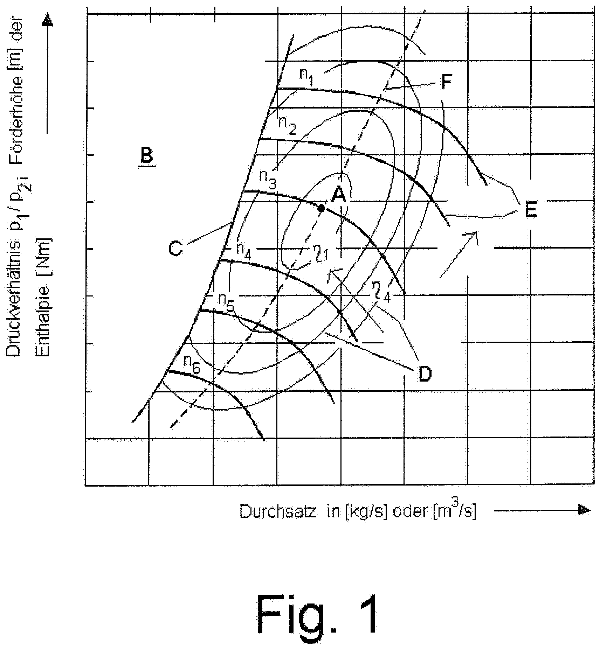

Der Betrieb eines Abgasturboladers kann jedoch instabil werden, was durch ein Auftreten eines so genannten Turboladerpumpens erfolgen kann und nicht verhindert wird. Pumpen von Turboladern entsteht durch Abreißen der Strömung an den Verdichterschaufeln. Das Abreißen der Strömung findet statt, wenn eine Pumpgrenze erreicht wird, also bei bestimmten Verhältnissen von Druckverhältnissen und Massenstrom. Dazu zeigt Fig. 1 ein Verdichterkennfeld eines Verdichters eines Abgasturboladers. Auf der Abszisse ist ein Durchsatz bzw. Massenstrom aufgetragen, und auf der Ordinate ein Druckverhältnis und Förderhöhe der Enthalpie. Dabei sind Kennlinienscharen dargestellt, von denen die Bezeichnung E Linien bei konstanter Drehzahl n des Verdichters sind. Es sind Linien E für sechs Drehzahlen n1 bis n6 aufgetragen, wobei n1>n6 gilt. Weiterhin sind mit dem Bezugszeichen D Linien gleichen Wirkungsgrades von η1 bis η4 gezeigt, wobei η1>η4. Der Schnittpunkt in einem Feld des besten Wirkungsgrades η1 mit einer Drehzahl n3 und einer Linie F für stoßfreie Anströmung gibt einen Auslegungspunkt oder Betriebspunkt A an. Diese Kennlinienschar ist zur linken Seite hin, d.h. zu geringen Durchsätzen bzw. Massenströmen, durch eine Pumpgrenze C zu einem instabilen Bereich B abgegrenzt.

Das Pumpen verursacht hohe dynamische Belastungen der Verdichterschaufeln und kann zum Ausfall des Turboladers führen.

Während eines Einblasevorgangs der Frischgasversorgungseinrichtung kann aufgrund einer geschlossenen Klappe, die einen Rückstrom der eingeblasenen Luft zum Verdichter des Turboladers verhindert, die Pumpgrenze C erreicht werden. Dies resultiert daraus, dass der Turbolader die Luft nach dem Verdichter gegen die geschlossene Klappe fördert. Dadurch ergibt sich ein immer kleiner werdender Massenstrom bei gleichzeitig ansteigendem Druckverhältnis.

WO 2010/089087 A1 beschreibt ein Verfahren und eine Vorrichtung zum Regeln eines Ladeluftdrucks einer Verbrennungskraftmaschine eines Fahrzeugs mit einem Abgasturbolader, einer Frischgasversorgungseinrichtung, einem Fahrzeugluftsystem mit einer Luftaufbereitung und mit einem durch den Abgasturbolader aufladbaren Kompressor, und einem Motorsteuergerät. Eine Drehmomentanforderung an die Verbrennungskraftmaschine wird erfasst, ein aktueller Ladedruck und ein aktueller Druck des Fahrzeugluftsystems werden ermittelt. Die aktuell ermittelten Drücke werden mit Sollwerten verglichen. Der Ladeluftdruck wird durch Unterbinden einer Zuführung von durch den Abgasturbolader gelieferter verdichteter Luft an den Kompressor geregelt, wenn der ermittelte aktuelle Ladeluftdruck kleiner als der korrespondierende Soll-Ladeluftdruck ist und der aktuelle Druck des Fahrzeugluftsystems größer als der oder gleich dem Sollbetriebsdruck des Fahrzeugluftsystems ist. Der Kompressor ist mittels zweier Ventile einerseits als aufgeladener Kompressor und andererseits als Kompressor mit Ansaugluft aus einer weiteren Luftquelle, zum Beispiel aus der Umgebung oder aus einem weiteren Luftspeicher oder einem weiteren Turbolader, betreibbar.

Es ist daher die Aufgabe der Erfindung, ein verbessertes Verfahren zum Regeln eines stabilen Betriebs ohne Turboladerpumpen eines Abgasturboladers einer Verbrennungskraftmaschine mit einem aufgeladenen Kompressor bereitzustellen.

Die Aufgabe wird durch ein Verfahren mit den Merkmalen des Anspruchs 1 gelöst.

Die Aufgabe wird auch durch eine Vorrichtung mit den Merkmalen des Anspruchs 6 gelöst.

Eine Idee der Erfindung besteht darin, einen stabilen Bereich eines Abgasturboladers durch Zusammenwirken beteiligter und bereits vorhandener Komponenten einer Verbrennungskraftmaschine zu regeln, indem ein Kompressor anhand von überwachten Betriebsparametern aus einem ansaugenden Betrieb in einen aufgeladenen Betrieb und zurück umgeschaltet wird.

Dadurch wird ein Systemverhalten verbessert, indem ein Arbeitspunkt des Abgasturboladers in einem stabilen Bereich verbleibt und nicht in einen instabilen Bereich gerät. So wird vorteilhaft ein so genanntes Turboladerpumpen verhindert.

Demgemäß weist ein Verfahren zum Regeln eines stabilen Betriebs eines Abgasturboladers einer Verbrennungskraftmaschine mit einer Frischgasversorgungseinrichtung, einem Umschaltventil, einer Steuereinrichtung, einem Kompressor und einer Luftaufbereitungseinheit mit einem Ablassventil folgende Verfahrensschritte auf: Betreiben des Kompressors in einem ansaugenden Modus, wobei das Umschaltventil den Kompressor mit einem Lufteinlass verbindet, und Überwachen von Betriebsparametern der Verbrennungskraftmaschine, der Luftaufbereitungseinheit und des Abgasturboladers;
Regeln des stabilen Betriebs des Abgasturboladers anhand der überwachten Betriebsparameter durch Umschalten des Kompressors aus dem ansaugenden Modus in einen aufgeladenen Modus, indem das Umschaltventil den Kompressor mit einem Verdichter des Abgasturboladers verbindet,
wobei ein Betrieb der Frischgasversorgungseinrichtung einen überwachten Betriebsparameter bildet; und
Umschalten des Kompressors anhand der überwachten Betriebsparameter aus dem aufgeladenen Modus in den ansaugenden Modus, indem das Umschaltventil den Kompressor wieder mit dem Lufteinlass verbindet.

Der Verfahrensschritt Regeln weist die folgenden Teilschritte auf:
Überwachen eines Ladedrucks und/oder eines Massenstroms des Verdichters des Abgasturboladers; und
Verbinden des Auslasses des Kompressors mit der Atmosphäre durch Öffnen des Ablassventils, wenn ein von dem Verdichter des Abgasturboladers in den Kompressor abgezweigter Massenstrom in dem aufgeladenen Modus des Kompressors noch zu gering ist, wobei ein Luftpfad für die Abführung des Luftmassenstroms aus einer Ladeluftleitung durch den Kompressor und durch das Ablassventil in die Atmosphäre gebildet und ein Pumpen des Abgasturboladers verhindert wird.

Mit Hilfe des Umschaltventils, was auch als ein intelligentes Umschaltventil bezeichnet werden kann, ist es im Luftsystem nun möglich, zwischen einem natürlich ansaugenden Modus des Kompressors (Abnahme der Luft aus einem Lufteinlass vor dem Verdichter des Abgasturboladers) und einem aufgeladenen Modus des Kompressors (Abnahme der verdichteten Luft nach dem Verdichter) umzuschalten.

Abhängig von verschiedenen Betriebsparametern, wie zum Beispiel Motordrehzahl und Ladedruck, bestimmt die Steuereinrichtung die Stellung des Umschaltventils.

Beim Regeln kann auch ein Überwachen eines Ladedrucks und/oder eines Massenstroms des Verdichters des Abgasturboladers erfolgen. Dabei wird zum Beispiel der jeweils aktuelle ermittelte Parameter mit einem vorbestimmbaren Grenzwert verglichen. Steigt zum Beispiel der Ladedruck des Verdichters trotzdem weiterhin an, so kann ein Verbinden des Auslasses des Kompressors mit der Atmosphäre durch Öffnen
nen des Ablassventils erfolgen. Dies ist auch stufenweise oder stufenlos in einer weiteren Ausführung möglich, wobei eine besonders gute Anpassung an den jeweiligen Betriebszustand erfolgen kann.

Im Verfahrensschritt Regeln kann ein Betrieb der Frischgasversorgungseinrichtung einen überwachten Betriebsparameter bilden. Beim Aktivieren der Frischgasversorgungseinrichtung erfolgt dann das Umschalten des Kompressors aus dem ansaugenden Modus in den aufgeladenen Modus und nach Aktivieren der Frischgasversorgungseinrichtung das Umschalten des Kompressors aus dem aufgeladenen Modus in den ansaugenden Modus. Diese Betriebsparameter sind als Signale z.B. von einer Motorsteuerung bereits verfügbar und müssen nicht zusätzlich generiert werden.

Beim Regeln können auch eine Schubphase der Verbrennungskraftmaschine und ein Betrieb der Frischgasversorgungseinrichtung überwachte Betriebsparameter bilden. Liegt kein Betrieb der Frischgasversorgungseinrichtung vor, so erfolgt bei Beginn einer Schubphase das Umschalten des Kompressors aus dem ansaugenden Modus in den aufgeladenen Modus und nach Ende der Schubphase das Umschalten des Kompressors aus dem aufgeladenen Modus in den ansaugenden Modus. Damit wird die bei der Schubphase erzeugte Energie in der Ladeluft auch ausgenutzt, um Druckluft zu erzeugen und zu speichern.

Es ist auch möglich, dass ein so genanntes Wast-Gate-Ventil eines Abgasturboladers, wenn er damit ausrüstbar ist, entfallen kann. Dabei können im Verfahrensschritt Regeln die Betriebsparameter für den Betrieb des Waste-Gate-Ventils des Abgasturboladers überwachte Betriebsparameter bilden, wobei ein Signal zum Öffnen des Waste-Gate-Ventils das Umschalten des Kompressors aus dem ansaugenden Modus in den aufgeladenen Modus und ein Signal zum Schließen des Waste-Gate-Ventils das Umschalten des Kompressors aus dem aufgeladenen Modus in den ansaugenden Modus bewirkt.

Eine Vorrichtung zur Durchführung eines Verfahrens zum Regeln eines stabilen Betriebs eines Abgasturboladers einer Verbrennungskraftmaschine weist Folgendes auf: eine Frischgasversorgungseinrichtung zum Einblasen von Zusatzluft in die Verbrennungskraftmaschine bei einem Bedarf an transienter Leistung; einen Kompressor zur Erzeugung von Druckluft; und eine Luftaufbereitungseinheit für die Druckluft mit einem Ablassventil. Die Vorrichtung ist durch ein Umschaltventil und eine Steuereinrichtung gekennzeichnet. Das Umschaltventil verbindet den Kompressor mit einem Lufteinlass in einem ansaugenden Modus des Kompressors und verbindet den Kompressor mit einem Verdichter des Abgasturboladers in einem aufgeladenen Modus des Kompressors. Die Steuereinrichtung dient zur Steuerung des Umschaltventils zur Regelung eines stabilen Betriebs eines Abgasturboladers.

Die Steuereinrichtung kann auch zur Steuerung des Ablassventils ausgebildet sein, wodurch eine größere individuelle Regelung des stabilen Betriebs des Abgasturboladers ermöglicht wird.

In einer Ausführung kann die Steuereinrichtung Bestandteil einer Motorsteuerung oder der Luftaufbereitungseinheit sein. Somit wird kein zusätzlicher Bauraum benötigt.

In einer anderen Ausführung kann die Frischgasversorgungseinrichtung ein Drosselklappenventil und ein Zusatzluftventil aufweisen. Wenn diese Ventile und/oder das Ablassventil stufig oder stufenlos einstellbare Ventile sind, ist eine weitere, umfangreiche Anpassung an Betriebszustände individuell möglich.

Die beschriebene Vorrichtung ist zur Durchführung des oben beschriebenen Verfahrens geeignet.

Die Erfindung wird nun anhand eines Ausführungsbeispiels mit Bezug auf die beigefügten Zeichnungen näher erläutert. Hierbei zeigt:
- Fig. 1: ein Verdichterkennfeld;
- Fig. 2: eine schematische Blockdarstellung einer Verbrennungskraftmaschine mit einer erfindungsgemäßen Vorrichtung zur Durchführung eines erfindungsgemäßen Verfahrens in einem ersten Betriebszustand;
- Fig. 3: die schematische Blockdarstellung nach Fig. 2 in einem zweiten Betriebszustand;
- Fig. 4: die schematische Blockdarstellung nach Fig. 2 in einem dritten Betriebszustand; und
- Fig. 5: ein Flussdiagramm eines Ausführungsbeispiels des erfindungsgemäßen Verfahrens.

Fig. 1 wurde bereits oben in der Beschreibungseinleitung erläutert.

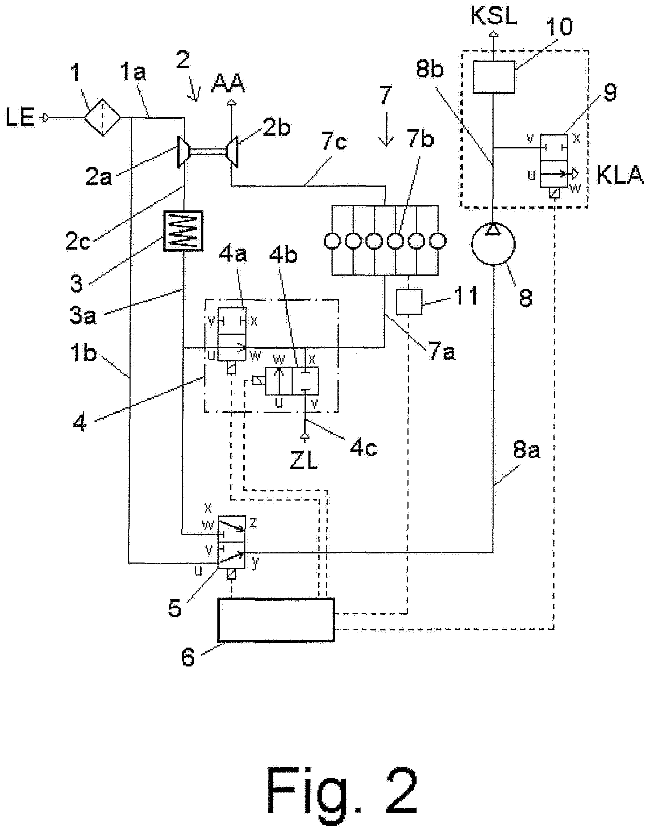

In Fig. 2 ist eine schematische Blockdarstellung einer Verbrennungskraftmaschine 7 mit einer erfindungsgemäßen Vorrichtung zur Durchführung eines erfindungsgemäßen Verfahrens in einem ersten Betriebszustand dargestellt.

Die erfindungsgemäße Vorrichtung zur Durchführung eines erfindungsgemäßen Verfahrens zum Regeln eines stabilen Betriebs eines Abgasturboladers 2 einer Verbrennungskraftmaschine 7 umfasst eine Frischgasversorgungseinrichtung 4, einen Kompressor 8 zur Erzeugung von Druckluft für eine Druckluftanlage mit einer Luftaufbereitungseinheit 10 und einem Ablassventil 9, ein Umschaltventil 5 und eine Steuereinrichtung 6.

Ein Lufteinlass LE dient zur Ansaugung von Frischluft aus der Atmosphäre für die Verbrennungskraftmaschine 7, welche mit einem Ansaugkrümmer 7a, sechs Zylindern 7b und einer Abgasleitung 7c gezeigt ist. Der Lufteinlass LE ist mit einem Luftfilter 1 verbunden, hinter welchem eine Ansaugleitung in eine Verdichteransaugleitung 1 a und eine Ansaugleitung 1 b verzweigt.

Die Verdichteransaugleitung 1 a ist an einen Verdichter 2a des Abgasturboladers 2 angeschlossen, wobei der Verdichter 2a mit einer Turbine 2b des Abgasturboladers 2 gekopppelt ist, welche mit der Abgasleitung 7c der Verbrennungskraftmaschine 7 kommuniziert. Die Turbine 2b ist mit ihrem Auslass an einen Abgasauslass AA angeschlossen.

Die Ansaugleitung 1 b ist mit einer Eingangsseite des Umschaltventils 5 verbunden, das unten weiter noch näher beschrieben wird.

Der Verdichter 2a des Abgasturboladers 2 ist über eine Verdichterleitung 2c mit einem Ladeluftkühler 3 verbunden, welcher mit einer Ladeluftleitung 3a sowohl an einem Anschluss u eines Drosselklappenventils 4a der Frischgasversorgungseinrichtung 4 eines so genannten PBS-Systems (Pneumatic Booster System) als auch einem weiteren Anschluss der Eingangsseite des Umschaltventils 5 angeschlossen ist. Die Frischgasversorgungseinrichtung 4 weist außer dem Drosselklappenventil 4a hier noch ein Zusatzluftventil 4b auf. Das Zusatzluftventil 4b ist über einen Zusatzluftleitung 4c mit einem Anschluss für Zusatzluft ZL verbunden ist. Die Zusatzluft ZL kann zum Beispiel aus einem nicht gezeigten Druckluftbehälter stammen. Das Drosselklappenventil 4a und das Zusatzluftventil 4b sind auf ihren Auslassseiten zusammen mit dem Ansaugkrümmer 7a der Verbrennungskraftmaschine 7 verbunden. Eine ausführliche Beschreibung einer derartigen Frischgasversorgungseinrichtung 4 kann der WO2006/089779A1 entnommen werden.

Das Umschaltventil 5 ist auf seiner Auslassseite mit dem Kompressor 8 über eine Kompressoreinlassleitung 8a verbunden. Der Kompressor 8 ist von der Verbrennungskraftmaschine 7 in nicht gezeigter Weise angetrieben. Er kann auch einen elektrischen Antriebsmotor separat oder zusätzlich aufweisen. Eine Kompressordruckleitung 8b ist sowohl mit einer Einlassseite des Ablassventils 9 als auch einem Eingang der Luftaufbereitungseinheit 10 für eine Druckluftanlage verbunden. Ein Auslass der Luftaufbereitungseinheit 10 ist an einem Anschluss für Kompressorspeicherluft KSL angeschlossen, der zum Beispiel zu einem Druckluftbehälter (nicht gezeigt) führt. Die Auslassseite des Ablassventils 9 ist mit einem Kompressorluftauslass KLA, der in die Atmosphäre führt, verbunden.

Die Steuerung 6 ist über Steuerleitungen (gestrichelt gezeichnet) mit einem Motorsteuergerät 11 der Verbrennungsmaschine 7, dem Drosselklappenventil 4a und dem Zusatzluftventil 4b der Frischgasversorgungseinrichtung 4, dem Umschaltventil 5 und dem Ablassventil 9 verbunden. Diese Ventile 4a, 4b, 5 und 9 sind beispielsweise elektrisch ansteuerbar und haben einen elektrischen Antrieb. Andere Antriebsarten sind natürlich vorstellbar. Alle diese Verbindungen und weitere, nicht gezeigte z.B. mit der Luftaufbereitungseinheit 10 und dem Abgasturbolader 2, können Bestandteile eines Bus-Systems, z.B. CAN-Bus, eines Fahrzeugs mit der Verbrennungskraftmaschine 7 sein.

In der Fig. 2 ist ein erster Betriebszustand der Vorrichtung, z.B. bei einem Betrieb der Verbrennungskraftmaschine 7 bei konstanter Drehzahl, gezeigt. Hierbei arbeitet der Kompressor 8 in einem so genannten Ansaugmodus. Das bedeutet, dass die von ihm komprimierte Luft durch den Lufteinlass LE angesaugt wird und dabei über die Ansaugleitung 1 b durch das Umschaltventil 5 in die Kompressoreinlassleitung 8a strömt. Das Umschaltventil 5 ist in diesem ersten Betriebszustand so geschaltet, dass die Ansaugleitung 1 b über die Ventilstellung u/y des Umschaltventils 5 mit der Kompressoreinlassleitung 8a verbunden ist. Die an das Umschaltventil 5 außerdem angeschlossene Ladeluftleitung 3a ist durch die Ventilstellung w des Umschaltventils 5 geschlossen. Das Ablassventil 9 ist in geschlossener Stellung, d.h. die Kompressordruckleitung 8b, welche am Ablassventil 9 angeschlossen ist, ist durch die Stellung v des Ablassventils 9 gesperrt. Somit erzeugt der Kompressor 8 in ersten Betriebszustand der Vorrichtung komprimierte Luft aus dem Lufteinlass LE, die er ansaugt und durch die Kompressordruckleitung 8b an die Luftaufbereitungseinheit 10, z.B. zum Speichern in einem Druckluftbehälter, fördert.

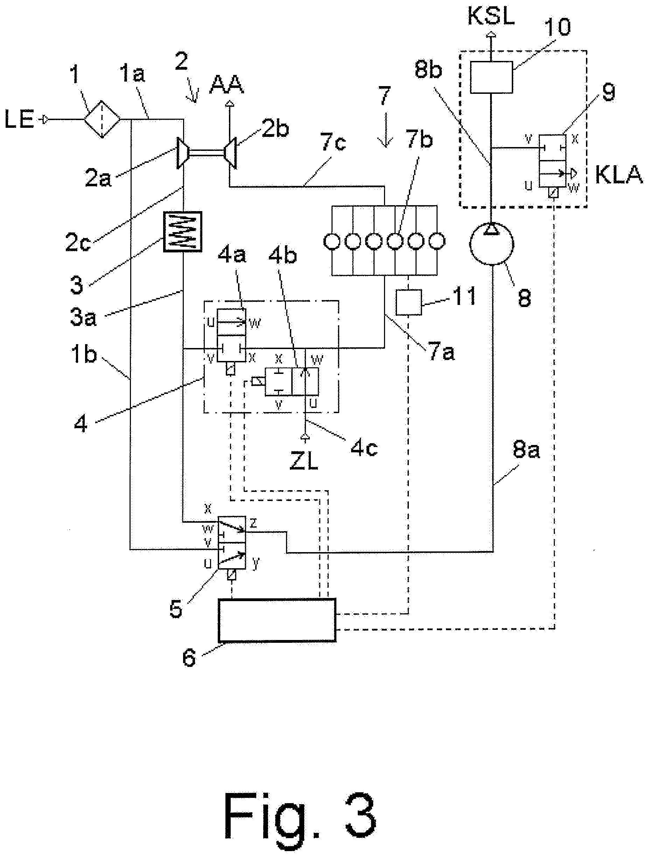

Wenn die Verbrennungskraftmaschine eine Übergangsleistung, d.h. eine transiente Leistung, benötigt, fordert das Motorsteuergerät 11 beispielsweise über den CAN-Bus eine Aktivierung der Frischgasversorgungseinrichtung 4 an. Gleichzeitig erhält die Steuereinrichtung 6 die Information über die bevorstehende Aktivierung der Frischgasversorgungseinrichtung 4. Sobald das Drosselklappenventil 4a geschlossen wird (Anschlüsse v und x gesperrt) und ein Einblasvorgang von Zusatzluft ZL durch das geöffnete Zusatzluftventil 4b (Anschlüsse u und w verbunden) in den Ansaugkrümmer 7a der Verbrennungskraftmaschine 7 beginnt, wird das Umschaltventil 5 in die in Fig. 3 gezeigte Ventilstellung geschaltet, in welcher die Kompressoreinlassleitung 8a mit der Ladeluftleitung 3a über die Ventilstellung x/z des Umschaltventils 5 verbunden ist. Dabei ist die Ansaugleitung 1 b durch die Ventilstellung v des Umschaltventils 5 geschlossen.

Bei der schematischen Blockdarstellung der Vorrichtung gemäß Fig. 3 ist ein zweiter Betriebszustand der Vorrichtung gezeigt, in welchem der Kompressor 8 in einem aufgeladenen Modus arbeitet.

Durch die Verbindung der Ladeluftleitung 3a mit der Kompressoreinlassleitung 8a erhält der Kompressor 8 verdichtete Ladeluft aus dem Ladeluftkühler 3 von dem Verdichter 2a des Abgasturboladers 2. Dadurch wird es ermöglicht, einen Massenstrom vom Verdichter 2a abzuzweigen und so ein Pumpen des Abgasturboladers 2 zu vermeiden, da der Verdichter 2a weiterhin durch Förderung dieses Massenstroms außerhalb des instabilen Bereiches B (siehe Fig. 1) im stabilen Bereich seines Kennlinienfeldes bleibt.

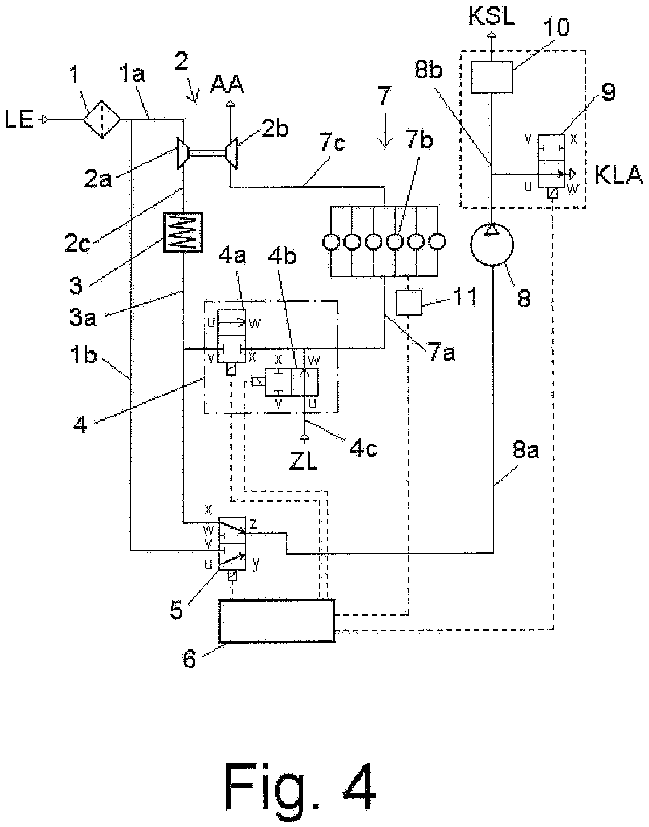

Ist dieser abgezweigte Massenstrom noch zu gering, kann zur gleichen Zeit die Steuereinheit 6 ein Signal zur Öffnung des Ablassventils 9 erhalten. Dies ist in Fig. 4 mit einer schematischen Blockdarstellung in einem dritten Betriebszustand der Vorrichtung gezeigt. So entsteht ein Luftpfad für die Abführung des Luftmassenstroms aus der Ladeluftleitung 3a durch die weiterhin vorhandene Stellung x/z des Umschaltventils 5 in die Kompressoreinlassleitung 8a durch den Kompressor 8 in die Kompressordruckleitung 8b und durch das Ablassventil 9 in Stellung u/w über den Kompressorluftauslass KLA in die Atmosphäre. Der maximal mögliche Massenstrom durch diesen Luftpfad hängt unter anderem von dem Querschnitt des Ablassventils 9 ab. Mit Hilfe dieses Massenluftstroms durch den Kompressor 8 wird ein starker Abbruch des Massenstroms im Verdichter 2a des Abgasturboladers 2 verhindert, so dass ein Turboladerpumpen bei geschlossenem Drosselklappenventil 4a der Frischgasversorgungseinrichtung 4 nicht auftritt und ein stabiler Betrieb des Abgasturboladers.

Eine Ermittlung der Größe des abgezweigten Massenstroms kann zum Beispiel mittels der Luftaufbereitungseinheit 10 festgestellt werden. Weiterhin können dazu an dem Verdichter 2a des Abgasturboladers 2 und/oder in der Frischgasversorgungseinrichtung 4 an der Eingangsseite des Drosselklappenventils 4a geeignete Messwertgeber, z.B. Druckaufnehmer, angeordnet sein.

Nach Beendigung der Aktivierung der Frischgasversorgungseinrichtung 4 besteht eine Gefahr für ein Turboladerpumpen nicht mehr. Nachdem das Drosselklappenventil 4a sich wieder öffnet, wird das Ablassventil 9 wieder geschlossen. Das Umschaltventil 5 kann dann abhängig von den aktuellen Betriebsparameter, die noch erläutert werden, den Kompressor 8 entweder im aufgeladenen Modus (Stellung x/z) lassen oder in den natürlich ansaugenden Modus (Stellung u/y) zurück umschalten.

Beispielsweise sollte der Kompressor 8 bei Volllastbeschleunigung der Verbrennungskraftmaschine 7 - nach Aktivierung der Frischgasversorgungseinrichtung 4 - in den natürlich ansaugenden Modus geschaltet werden, um einen Abfall des Ladedrucks des Verdichters 2a zu vermeiden.

Die Vorrichtung ist nicht nur in der Lage, ein Turboladerpumpen zu verhindern, sonder kann auch die folgenden Vorteile erbringen.

Derzeitige Abgasturbolader 2 weisen häufig ein so genanntes Waste-Gate-Ventil (nicht gezeigt) auf. Dieses Ventil öffnet ab einem bestimmten Ladedruck im Verdichter 2a und leitet einen vorbestimmten Massenstrom von Abgas an der Turbine 2b des Abgasturboladers 2 vorbei. Damit wird verhindert, dass der Abgasturbolader 2 und/oder die Verbrennungskraftmaschine 7 beschädigt wird. So wird durch das umgeleitete Abgas dessen Energie nicht genutzt. In diesen Phasen der Aktivierung des Waste-Gate-Ventils kann das Umschaltventil 5 immer in die Stellung x/z umgeschaltet werden, in welcher der Kompressor 8 im aufgeladenen Modus arbeitet. Auf diese Weise kann der zur Verfügung stehende Massenstrom des Abgases vollständig genutzt werden, um mittels des Verdichters 2a zusätzliche Ladeluft, welche die Verbrennungsmaschine 7 nicht benötigt, dem Kompressor 8 und somit einer damit verbundenen Druckluftanlage zur Speicherung zuzuführen.

Außerdem kann das Umschaltventil 5 auch in Schubphasen der Verbrennungsmaschine 7 in die Stellung x/z umgeschaltet werden, in welcher der Kompressor 8 im aufgeladenen Modus arbeitet. Auch hierbei kann vorhandene Energie ausgenutzt werden.

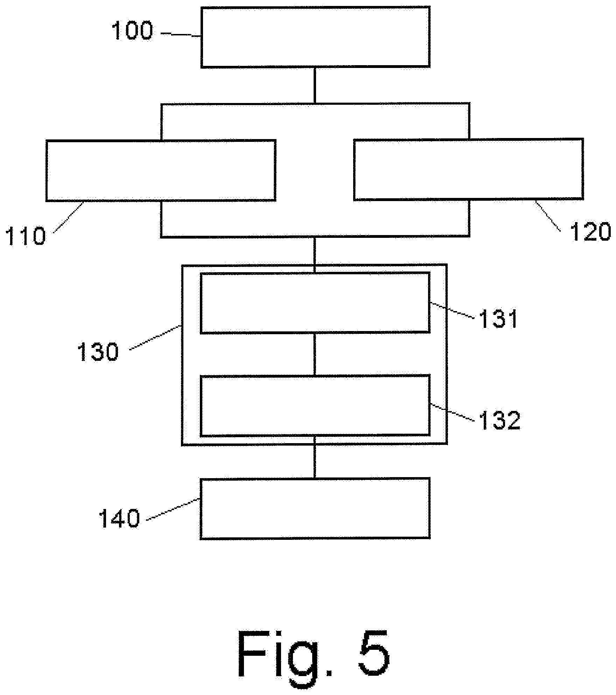

Fig. 5 stellt ein Flussdiagramm eines Ausführungsbeispiels des erfindungsgemäßen Verfahrens zum Regeln eines stabilen Betriebs eines Abgasturboladers 2 einer Verbrennungskraftmaschine 7 dar.

In einem ersten Verfahrensschritt 100 wird in einem ersten Betriebszustand der Kompressor 8 im ansaugenden Modus betrieben, wobei das Umschaltventil 5 die Kompressoreinlassleitung 8a mit dem Lufteinlass LE über die Ansaugleitung 1 b verbindet. Gleichzeitig werden Betriebsparameter der Verbrennungskraftmaschine 7 und der Luftaufbereitungseinheit 10 überwacht.

In einem zweiten Verfahrensschritt 110 wird eine transiente Leistung der Verbrennungskraftmaschine 7 gefordert und die Frischgasversorgungseinrichtung 4 aktiviert. Diese Vorgänge werden anhand der überwachten Betriebsparameter ausgeführt.

Daraufhin wird in einem dritten Verfahrensschritt 130 zum Regeln des stabilen Betriebs des Abgasturboladers 2 der Kompressor 8 aus dem ansaugenden Modus in den aufgeladenen Modus umgeschaltet. Dies erfolgt dadurch, dass das Umschaltventil 5 die Kompressoreinlassleitung 8a mit dem Verdichter 2a des Abgasturboladers 2 verbindet und die Ansaugleitung 1 b sperrt bzw. verschließt.

Schließlich erfolgt ein vierter Verfahrensschritt 140, in welchem anhand der überwachten Betriebsparameter eine Beendigung der Aktivierung der Frischgasversorgungseinrichtung 4 festgestellt wird. Daraufhin wird der Kompressor 8 wieder in den ansaugenden Modus geschaltet, indem das Umschaltventil 5 die Kompressoreinlassleitung 8a mit der Ansaugleitung 1 b verbindet und die Verbindung der Kompressoreinlassleitung 8a zur Ladeluftleitung 3a aufhebt.

Der Verfahrensschritt 130 weist zwei Teilschritte 131 und 132 auf. Im Teilschritt 131 wird ein Ladedruck und/oder ein Massenstrom des Verdichters 2a des Abgasturboladers 2 überwacht, indem dieser jeweilige Parameter mit einem vorbestimmbaren Wert verglichen wird. Sobald der jeweilige Parameter diesen Vergleichswert übersteigt, wird im Teilschritt 132 das Ablassventil 9 geöffnet, um die Kompressordruckleitung 8b mit dem Kompressorluftauslass KLA zu verbinden. Ist der jeweilige Parameter unter einen weiteren vorbestimmbaren Wert gefallen, wird das Ablassventil 9 wieder geschlossen.

In einem alternativen zweiten Verfahrensschritt 120 wird, wenn die Frischgasversorgungseinrichtung 4 nicht aktiviert ist, anhand der Betriebsparameter festgestellt, ob die Verbrennungskraftmaschine 7 in einer Schubphase betrieben wird oder/und ob ein Waste-Gate-Ventil des Abgasturboladers 2 (falls dieser mit einem solchen ausgerüstet ist) geöffnet wird. In jedem der beiden Fälle wird dann der dritte Verfahrensschritt 130 ausgeführt und der Kompressor 8 in den aufgeladenen Modus umgeschaltet.

Die Erfindung ist nicht auf die oben beschriebenen Ausführungsbeispiele beschränkt. Im Rahmen der beigefügten Ansprüche ist die Erfindung modifizierbar.

So ist zum Beispiel denkbar, dass die Steuereinrichtung 6 ein Bestandteil der Motorsteuerung 11 oder der Luftaufbereitungseinheit 10 ist.

Die Steuerungseinrichtung 6 kann außerdem in einer nicht gezeigten Speichereinrichtung Tabellenwerte des jeweiligen Verdichterkennfeldes aufweisen, wobei anhand der überwachten Parameter der jeweilige aktuelle Betriebspunkt A (siehe Fig. 1) ermittelt wird und durch entsprechendes Umschalten des Kompressors 8 mittels des Umschaltventils 5 in den jeweiligen erforderlichen Modus verhindert wird, dass der aktuelle Betriebspunkt A die Pumpgrenze C überschreitet und in den instabilen Bereich B gelangt.

Das Drosselklappenventil 4a, das Zusatzluftventil 4b und/oder das Ablassventil 9 können auch als Stellventile mit stufenweise oder stufenlos veränderbarem Durchlassquerschnitt ausgebildet sein. Hierbei ist mit einem solchen Ablassventil 9 eine besonders individuelle Anpassung über einstellbare Massenströme möglich.

Die Frischgasversorgungseinrichtung 4 kann eine solche wie in WO2006/089779A1 beschrieben sein.

### Bezugszeichenliste

- 1: Luftfilter
- 1 a: Verdichteransaugleitung
- 1 b: Ansaugleitung
- 2: Abgasturbolader
- 2a: Verdichter
- 2b: Turbine
- 2c: Verdichterleitung
- 3: Ladeluftkühler
- 3a: Ladeluftleitung
- 4: Frischgasversorgungseinrichtung
- 4a: Drosselklappenventil
- 4b: Zusatzluftventil
- 4c: Zusatzluftleitung
- 5: Umschaltventil
- 6: Steuereinrichtung
- 7: Verbrennungskraftmaschine
- 7a: Ansaugkrümmer
- 7b: Zylinder
- 7c: Abgasleitung
- 8: Kompressor
- 8a: Kompressoreinlassleitung
- 8b: Kompressordruckleitung
- 9: Ablassventil
- 10: Luftaufbereitungseinheit
- 100...140: Verfahrensschritte
- A: Betriebspunkt
- AA: Abgasauslass
- B: Instabiler Bereich
- C: Pumpgrenze
- D: Linien gleichen Wirkungsgrades
- E: Linien gleicher Drehzahl
- F: Linie stoßfreier Anströmung
- KLA: Kompressorluftauslass
- KSA: Kompressorspeicherluft
- LE: Lufteinlass
- ZL: Zusatzluft
- u...z: Ventilanschluss

## Patentansprüche

1. Verfahren zum Regeln eines stabilen Betriebs eines Abgasturboladers (2) einer Verbrennungskraftmaschine (7) mit einer Frischgasversorgungseinrichtung (4), einem Umschaltventil (5), einer Steuereinrichtung (6), einem Kompressor (8) und einer Luftaufbereitungseinheit (10) mit einem Ablassventil (9), mit folgenden Verfahrensschritten:
- Betreiben des Kompressors (8) in einem ansaugenden Modus, wobei das Umschaltventil (5) den Kompressor (8) mit einem Lufteinlass (LE) verbindet, und Überwachen von Betriebsparametern der Verbrennungskraftmaschine (7), der Luftaufbereitungseinheit (10) und des Abgasturboladers (2);
- Regeln des stabilen Betriebs des Abgasturboladers (2) anhand der überwachten Betriebsparameter durch Umschalten des Kompressors (8) aus dem ansaugenden Modus in einen aufgeladenen Modus, indem das Umschaltventil (5) den Kompressor (8) mit einem Verdichter (2a) des Abgasturboladers (2) verbindet,
wobei ein Betrieb der Frischgasversorgungseinrichtung (4) einen überwachten Betriebsparameter bildet; und
- Umschalten des Kompressors (8) anhand der überwachten Betriebsparameter aus dem aufgeladenen Modus in den ansaugenden Modus, indem das Umschaltventil (5) den Kompressor (8) wieder mit dem Lufteinlass (LE) verbindet,
wobei der Verfahrensschritt Regeln die folgenden Teilschritte aufweist:
- Überwachen eines Ladedrucks und/oder eines Massenstroms des Verdichters (2a) des Abgasturboladers (2); und
- Verbinden des Auslasses des Kompressors (8) mit der Atmosphäre durch Öffnen des Ablassventils (9), wenn ein von dem Verdichter (2a) des Abgasturboladers (2) in den Kompressor (8) abgezweigter Massenstrom in dem aufgeladenen Modus des Kompressors (8) noch zu gering ist, wobei ein Luftpfad für die Abführung des Luftmassenstroms aus einer Ladeluftleitung (3a) durch den Kompressor (8) und durch das Ablassventil (9) in die Atmosphäre gebildet und ein Pumpen des Abgasturboladers (2) verhindert wird.

2. Verfahren nach Anspruch 1, **dadurch gekennzeichnet, dass** das Öffnen des Ablassventils (9) stufenweise oder stufenlos erfolgt.

3. Verfahren nach Anspruch 1 oder 2, **dadurch gekennzeichnet, dass** beim Aktivieren der Frischgasversorgungseinrichtung (4) das Umschalten des Kompressors (8) aus dem ansaugenden Modus in den aufgeladenen Modus und nach Aktivieren der Frischgasversorgungseinrichtung (4) das Umschalten des Kompressors (8) aus dem aufgeladenen Modus in den ansaugenden Modus erfolgt.

4. Verfahren nach Anspruch 1 oder 2, **dadurch gekennzeichnet, dass** im Verfahrensschritt Regeln eine Schubphase der Verbrennungskraftmaschine (7) und ein Betrieb der Frischgasversorgungseinrichtung (4) überwachte Betriebsparameter bilden, wobei, wenn kein Betrieb der Frischgasversorgungseinrichtung (4) vorliegt, bei Beginn einer Schubphase das Umschalten des Kompressors (8) aus dem ansaugenden Modus in den aufgeladenen Modus und nach Ende der Schubphase das Umschalten des Kompressors (8) aus dem aufgeladenen Modus in den ansaugenden Modus erfolgt.

5. Verfahren nach einem der vorhergehenden Ansprüche, **dadurch gekennzeichnet, dass** im Verfahrensschritt Regeln die Betriebsparameter für den Betrieb eines Waste-Gate-Ventils des Abgasturboladers (2) überwachte Betriebsparameter bilden, wobei ein Signal zum Öffnen des Waste-Gate-Ventils das Umschalten des Kompressors (8) aus dem ansaugenden Modus in den aufgeladenen Modus und ein Signal zum Schließen des Waste-Gate-Ventils das Umschalten des Kompressors (8) aus dem aufgeladenen Modus in den ansaugenden Modus bewirkt.

6. Vorrichtung zur Durchführung eines Verfahrens nach einem der vorhergehenden Ansprüche, mit:
a. einer Frischgasversorgungseinrichtung (4) zum Einblasen von Zusatzluft (ZL) in die Verbrennungskraftmaschine (7) bei einem Bedarf an transienter Leistung;
b. einen Kompressor (8) zur Erzeugung von Druckluft; und
c. eine Luftaufbereitungseinheit (10) für die Druckluft mit einem Ablassventil (9),
d. ein Umschaltventil (5), welches den Kompressor (8) mit einem Lufteinlass (LE) in einem ansaugenden Modus des Kompressors (8) verbindet und den Kompressor (8) mit einem Verdichter (2a) des Abgasturboladers (2) in einem aufgeladenen Modus des Kompressors (8) verbindet; und
e. eine Steuereinrichtung (6) zur Steuerung des Umschaltventils (5) zur Regelung eines stabilen Betriebs eines Abgasturboladers (2),
**gekennzeichnet dadurch, dass**
die Steuereinrichtung (6) zur Steuerung des Ablassventils (9), wenn ein von dem Verdichter (2a) des Abgasturboladers (2) in den Kompressor (8) abgezweigter Luftmassenstrom in dem aufgeladenen Modus des Kompressors (8) noch zu gering ist, zur Bildung eines Luftpfades für die Abführung des Luftmassenstroms aus einer Ladeluftleitung (3a) durch den Kompressor (8) und durch das Ablassventil (9) in die Atmosphäre und zur Überwachung eines Betriebs der Frischgasversorgungseinrichtung (4) ausgebildet ist.

7. Vorrichtung nach Anspruch 6, **dadurch gekennzeichnet, dass** die Steuereinrichtung (6) Bestandteil einer Motorsteuerung (11) oder der Luftaufbereitungseinheit (10) ist.

8. Vorrichtung nach Anspruch 6 oder 7, **dadurch gekennzeichnet, dass** die Frischgasversorgungseinrichtung (4) ein Drosselklappenventil (4a) und ein Zusatzluftventil (4b) aufweist.

9. Vorrichtung nach einem der Ansprüche 6 bis 8, **dadurch gekennzeichnet, dass** das Drosselklappenventil (4a), das Zusatzluftventil (4b) und/oder das Ablassventil (9) stufig oder stufenlos einstellbare Ventile sind.

## Claims

1. Method for regulating stable operation of an exhaust-gas turbocharger (2) of an internal combustion engine (7) having a fresh-gas supply device (4), a switchover valve (5), a control device (6), a compressor (8) and an air-processing unit (10) with a discharge valve (9), having the following method steps:
- operating the compressor (8) in a suction intake mode, wherein the switchover valve (5) connects the compressor (8) to an air inlet (LE), and monitoring operating parameters of the internal combustion engine (7), of the air-processing unit (10) and of the exhaust-gas turbocharger (2);
- regulating stable operation of the exhaust-gas turbocharger (2) on the basis of the monitored operating parameters by switching over the compressor (8) from the suction intake mode to a pressure-charged mode, with the switchover valve (5) connecting the compressor (8) to a compressor (2a) of the exhaust-gas turbocharger (2), wherein operation of the fresh-gas supply device (4) forms a monitored operating parameter; and
- switching over the compressor (8) on the basis of the monitored operating parameters from the pressure-charged mode into the suction intake mode, with the switchover valve (5) connecting the compressor (8) to the air inlet (LE) again, wherein the method step of regulation has the following component steps:
- monitoring a boost pressure and/or a mass flow of the compressor (2a) of the exhaust-gas turbocharger (2); and
- connecting the outlet of the compressor (8) to the atmosphere by opening the discharge valve (9) if a mass flow diverted from the compressor (2a) of the exhaust-gas turbocharger (2) into the compressor (8) is still too small in the pressure-charged mode of the compressor (8), wherein an air path for the discharge of the air mass flow from a charge-air line (3a) through the compressor (8) and through the discharge valve (9) into the atmosphere is formed, and pumping of the exhaust-gas turbocharger (2) is prevented.

2. Method according to Claim 1, **characterized in that** the discharge valve (9) is opened in stages or continuously.

3. Method according to Claim 1 or 2, **characterized in that** the switching-over of the compressor (8) from the suction intake mode to the pressure-charged mode takes place when the fresh-gas supply device (4) is activated, and the switching-over of the compressor (8) from the pressure-charged mode to the suction intake mode takes place after the fresh-gas supply device (4) has been activated.

4. Method according to Claim 1 or 2, **characterized in that**, in the method step of regulation, an overrun phase of the internal combustion engine (7) and operation of the fresh-gas supply device (4) form monitored operating parameters, wherein, when the fresh-gas supply device (4) is not in operation, the switching-over of the compressor (8) from the suction intake mode to the pressure-charged mode takes place at the beginning of an overrun phase and the switching-over of the compressor (8) from the pressure-charged mode to the suction intake mode takes place after the end of the overrun phase.

5. Method according to one of the preceding claims, **characterized in that**, in the method step of regulation, the operating parameters for operation of a waste gate valve of the exhaust-gas turbocharger (2) form monitored operating parameters, wherein a signal for opening the waste gate valve brings about the switching-over of the compressor (8) from the suction intake mode to the pressure-charged mode and a signal for closing the waste gate valve brings about the switching-over of the compressor (8) from the pressure-charged mode to the suction intake mode.

6. Apparatus for carrying out a method according to one of the preceding claims, having:
a. a fresh-gas supply device (4) for injecting additional air (ZL) into the internal combustion engine (7) when there is a requirement for transient power;
b. a compressor (8) for producing compressed air; and
c. an air-processing unit (10) for the compressed air, having a discharge valve (9),
d. a switchover valve (5), which connects the compressor (8) to an air inlet (LE) in a suction intake mode of the compressor (8) and connects the compressor (8) to a compressor (2a) of the exhaust-gas turbocharger (2) in a pressure-charged mode of the compressor (8); and
e. a control device (6) for controlling the switchover valve (5) for regulating stable operation of an exhaust-gas turbocharger (2),
**characterized in that**
the control device (6) is designed to control the discharge valve (9), if an air mass flow diverted from the compressor (2a) of the exhaust-gas turbocharger (2) into the compressor (8) is still too small in the pressure-charged mode of the compressor (8), to form an air path for the discharge of the air mass flow from a charge-air line (3a) through the compressor (8) and through the discharge valve (9) into the atmosphere, and to monitor operation of the fresh-gas supply device (4).

7. Apparatus according to Claim 6, **characterized in that** the control device (6) is part of an engine controller (11) or of the air-processing unit (10).

8. Apparatus according to Claim 6 or 7, **characterized in that** the fresh-gas supply device (4) has a throttle valve (4a) and an additional-air valve (4b).

9. Apparatus according to one of Claims 6 to 8, **characterized in that** the throttle valve (4a), the additional-air valve (4b) and/or the discharge valve (9) are valves that can be adjusted in stages or continuously.

## Revendications

1. Procédé de réglage du fonctionnement stable d'un turbocompresseur (2) à gaz d'échappement d'un moteur (7) à combustion interne, comprenant un dispositif (4) d'alimentation en gaz frais, une soupape (5) d'inversion, un dispositif (6) de commande, un compresseur (8) et un groupe (10) de conditionnement d'air ayant un robinet (9) de soutirage, comprenant les stades suivantes :
- on fait fonctionner le compresseur (8) dans un mode d'aspiration, la soupape (5) d'inversion reliant le compresseur (8) à une entrée (LE) d'air et on contrôle des paramètres de fonctionnement du moteur (7) à combustion interne, du groupe (10) de conditionnement d'air et du turbocompresseur (2) à gaz d'échappement ;
- on règle le fonctionnement stable du turbocompresseur (2) à gaz d'échappement, à l'aide des paramètres de fonctionnement contrôlés, en faisant passer le compresseur (8) du mode d'aspiration à un mode de suralimentation, par le fait que la soupape (5) d'inversion relie le compresseur (8) à un condenseur (2a) du turbocompresseur (2) à gaz d'échappement,
dans lequel un fonctionnement du dispositif (4) d'alimentation en gaz frais forme un paramètre de fonctionnement contrôlé et
- on fait passer le compresseur (8), à l'aide des paramètres de fonctionnement contrôlés, du mode de suralimentation au mode d'aspiration, en faisant que la soupape (5) d'inversion relie le compresseur (8) à nouveau à l'entrée (LE) d'air,
dans lequel le stade du procédé réglage a les sous-stades suivantes :
- contrôle d'une pression de suralimentation et/ou d'un courant massique du condenseur (2a) du turbocompresseur (2) à gaz d'échappement et
- liaison de la sortie du compresseur (8) à l'atmosphère, par ouverture du robinet (9) de soutirage si un courant massique, dévié du condenseur (2a) du turbocompresseur (2) à gaz d'échappement au compresseur (8), est, dans le mode de suralimentation du compresseur (8), encore trop petit, un trajet d'air, pour l'évacuation du courant massique d'air du conduit (3a) d'air de suralimentation dans le compresseur (8) et dans le robinet (9) de soutirage à l'atmosphère, étant formé et un pompage du turbocompresseur (2) à gaz d'échappement étant empêché.

2. Procédé suivant la revendication 1, **caractérisé en ce que** l'ouverture du robinet (9) de soutirage s'effectue par étape ou en continu.

3. Procédé suivant la revendication 1 ou 2, **caractérisé en ce que**, lors de l'activation du dispositif (4) d'alimentation en gaz frais, a lieu le passage du compresseur (8) du mode d'aspiration au mode de suralimentation et, après l'activation du dispositif (4) d'alimentation en gaz frais, a lieu le passage du compresseur du mode de suralimentation au mode d'aspiration.

4. Procédé suivant la revendication 1 ou 2, **caractérisé en ce que**, dans le stade de procédé de réglage, une phase de poussée du moteur (7) à combustion interne et un fonctionnement du dispositif (4) d'alimentation en gaz frais forment des paramètres contrôlés, dans lequel, s'il n'y a pas de fonctionnement du dispositif (4) d'alimentation en gaz frais, au début d'une phase de poussée a lieu le passage du compresseur (8), du mode d'aspiration au mode de suralimentation et, après la fin de la phase de poussée, le passage du compresseur (8), du mode de suralimentation au mode d'aspiration.

5. Procédé suivant l'une des revendications précédentes, **caractérisé en ce que**, dans le stade de procédé de réglage, les paramètres de fonctionnement, pour le fonctionnement d'une valve waste-gate du turbocompresseur (2) à gaz d'échappement, forment les paramètres de fonctionnement contrôlés, un signal d'ouverture de la valve waste-gate provoquant le passage du compresseur (8), du mode d'aspiration au mode de suralimentation et un signal de fermeture de la valve waste-gate provoquant le passage du compresseur (8), du mode de suralimentation au mode d'aspiration.

6. Installation pour effectuer un procédé suivant l'une des revendications précédentes, comprenant :
a. un dispositif (4) d'alimentation à gaz frais, pour insuffler de l'air (ZL) supplémentaire dans le moteur (7) à combustion interne s'il y a un besoin de puissance transitoire ;
b. un compresseur (8) pour produire de l'air comprimé et
c. un groupe (10) de conditionnement d'air, pour l'air comprimé, comprenant un robinet (9) de soutirage,
d. une soupape (5) d'inversion, qui relie le compresseur (8) à une entrée (LE) d'air, dans un mode d'aspiration du compresseur (8), et qui relie le compresseur (8) à un condenseur (2a) du turbocompresseur (2) à gaz d'échappement, dans un mode de suralimentation du compresseur (8) et e un dispositif (6) de commande, pour commander la soupape (5) d'inversion, afin de réguler un fonctionnement stable d'un turbocompresseur (2) à gaz d'échappement,
**caractérisée en ce que**
le dispositif (6) de commande du robinet (9) de soutirage est constitué pour, si un courant massique d'air, dérivé du condenseur (2a) du turbocompresseur (2) à gaz d'échappement dans le compresseur (8), est, dans le mode de suralimentation du compresseur (8), encore trop petit, former un trajet d'air pour l'évacuation du courant massique d'air d'un conduit (3a) d'air de suralimentation par le compresseur (8) et par le robinet (9) de soutirage à l'atmosphère et pour contrôler un fonctionnement du dispositif (4) d'alimentation en gaz frais.

7. Installation suivant la revendication 6, **caractérisée en ce que** le dispositif (6) de commande fait partie d'une commande (11) du moteur ou du groupe (10) de conditionnement d'air.

8. Installation suivant la revendication 6 ou 7, **caractérisée en ce que** le dispositif (4) d'alimentation en gaz frais a une soupape (4a) à volet d'étranglement et une soupape (4b) supplémentaire pour de l'air.

9. Installation suivant l'une des revendications 6 à 8, **caractérisée en ce que** la soupape (4a) à volet d'étranglement, la soupape (4b) supplémentaire pour de l'air et/ou le robinet (9) de soutirage, sont des soupapes ou robinet réglables par échelon ou en continu.
